(19) Europäisches Patentamt
European Patent Office
Office européen des brevets

(11) **EP 2 520 994 A2**

(12) **EUROPEAN PATENT APPLICATION**

(43) Date of publication:
**07.11.2012 Bulletin 2012/45**

(51) Int Cl.:
***G05B 23/02*** *(2006.01)*

(21) Application number: **12166228.2**

(22) Date of filing: **30.04.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **04.05.2011 US 201113100479**

(71) Applicant: **General Electric Company**
**Schenectady, NY 12345 (US)**

(72) Inventors:
• **Mannar, Kamal**
**Atlanta, GA Georgia 30339 (US)**

• **Asati, Mahesh Kumar**
**560066 Bangalore, Karnataka (IN)**
• **Pandey, Achalesh Kumar**
**Greenville, SC South Carolina 29615 (US)**
• **Estrada, Kelvin Rafael**
**Norcross, GA Georgia 30003 (US)**

(74) Representative: **Cleary, Fidelma**
**GE International Inc.**
**Global Patent Operation-Europe**
**15 John Adam Street**
**London WC2N 6LU (GB)**

(54) **Automated system and method for implementing statistical comparison of power plant operations**

(57)     Systems and methods for analyzing power plant data include accessing data for one or more monitored parameters, generating a continuous time-series profile model (212) (e.g., by generalized additive model and/or principal curves techniques) of selected parameters during instances of at least one given type of power plant operation, and conducting shape analysis (214) by comparing the continuous time-series profile model of selected monitored parameters to an entitlement curve representing ideal performance for the at least one given type of power plant operation. Data associated with the profile modeling and shape analysis techniques may be provided as electronic output to a user (224). Additional steps or features may involve determining a capability index (216) for selected monitored parameters, clustering together (218) identified groups of profile models having similar profiles, monitoring (220) and/or optimizing parameters (222) to identify and improve power plant performance

Fig. 2

**Description**

FIELD OF THE INVENTION

The subject matter disclosed herein relates to systems and methods for implementing automated electronic analysis of power plant operations, and more particularly, to systems and methods of statistically comparing the shape and variation modes of operational profiles for power plant operations.

BACKGROUND OF THE INVENTION

Highly complex industrial operations such as implemented within a power plant environment often involve the sophisticated coordination of multiple machines and associated processes. Many of the industrial components within such a power plant environment may include sensors or other monitoring equipment in conjunction with a computing device so that the real-time conditions of such components can be electronically tracked. For example, some display panels within a power plant environment are capable of displaying various present plant operating conditions associated with the monitored respective components or processes within the plant.

The operational data for power plants described above is often available only in the form of a continuous time series. In other words, sensors constantly monitor a component and provide a non-stop flow of data such that an operator can observe real-time statistics of the present operational state of various plant components. To pick out specific plant operations from that data is a non-trivial matter.

Some known techniques are able to analyze specific plant operations only by undergoing a manual process of sorting and reviewing information on an ad hoc basis as necessary in response to a particular issue or concern. Such techniques typically involve manually mining reams of data to find particular plant operations and/or events, filtering through those operations/events to find ones that are relevant, extracting a few signals from the data, and then plotting them against one another. All of these lengthy and complex steps are normally done on an ad hoc basis, and typically have to be repeated for each issue as it arises. As such, a need remains to automate and streamline data analysis associated with the events occurring within a plant environment.

The ability to analyze historical data can also be difficult because of the sheer volume of information captured in conventional monitoring systems and limited ways to sort and access such data. Without ways to identify and store data associated with past operational events, an analyst may be forced to manually sort through extensive amounts of prior data to identify desired information. A need thus also remains for providing an ability to sort through and analyze historical power plant data and/or to provide meaningful comparisons of current data to historical data.

Still further, specific plant operations can be quite complex and variable, such that it is difficult to make useful comparisons among different instances of an operation. Analysis of plant operations by a human operator interacting with a data monitoring system can become increasingly difficult as the operator is required to mentally conceptualize and compare numerous abstract parameters associated with the plant environment. Also, visualizing plant operations, particularly visualizing more than one at a time, requires significant levels of arduous data manipulation. All of these realities are significant obstacles to characterizing and visualizing plant operations as part of any monitoring or improvement program. As such, a need also remains for electronic features designed to characterize and visualize data comparisons among power plants and operations thereof.

Yet another consideration in developing useful data analysis for power plant operations concerns how data associated with particular instances of an operation are compared with other similar data. It may often be useful to compare a given data set for a power plant operation with data associated with similar operations or with an ideal or preferred data set for that type of operation, sometimes referred to as an "entitlement curve." Some known techniques of operational profiles, such as those used in analyzing startup conditions of a power plant have focused on comparing parameter values (e.g., plant load) at specific discrete milestones to corresponding points in the entitlement curve to understand deviations in startup time, emissions and to estimate revenue loss. However, since such curves are discretized to only a few landmarks, significant information is lost in the analysis, thus making it difficult to identify modes of variation in startup time and to quantify differences to the entitlement curve in terms of shape of the curves and separating individual and plant level factors impacting startup.

The art is continuously seeking improved systems and methods for electronically analyzing the conditions and parameters associated with the various components and operations within power plants.

BRIEF DESCRIPTION OF THE INVENTION

In one aspect, the invention resides in a method of electronically analyzing power plant data, including electronically accessing power plant operational data including one or more monitored parameters; generating a continuous time-series profile model of selected monitored parameters during identified instances of at least one given type of power plant operation; conducting shape analysis by comparing the continuous time-series profile model of selected monitored parameters to an entitlement curve representing ideal performance for the at least one given type of power plant operation; and providing one or more of the generated continuous time-series profile model and the results of the conducted shape analysis as electronic output to a user.

The invention further resides in a computer program comprising computer program code means adapted to perform the above method, when run on a computer and in the computer program embodied on a computer-readable medium.

In yet a further aspect, the invention resides in a power plant analysis and display system, including at least one processing device, at least one memory including the above computer program

BRIEF DESCRIPTION OF THE DRAWINGS

Embodiments of the present invention will now be described, by way of example only, with reference to the accompanying drawings in which:

Fig. 1 is block diagram of exemplary hardware and software components within a power plant analysis system of the presently disclosed technology, including such components as the monitored hardware elements within a combined cycle (CC) power plant as well as the server and computer components that access the operational power plant data and characterize and display information in accordance with the disclosed techniques;

Fig. 2 is a flow chart of exemplary steps in a method of statistically comparing the shape and variation modes of parameter profiles for power plant operations;

Fig. 3 generally illustrates aspects of a first exemplary profile modeling technique, and particularly illustrates a series of graphical representations of power plant measurement data that is decomposed into a general additive model (GAM) profile in conjunction with residuals from the GAM profile;

Fig. 4 generally illustrates aspects of a second exemplary profile modeling technique, and particularly illustrates a series of graphical representations of power plant measurement data that is decomposed into a principal curves profile;

Fig. 5 is a flow chart of exemplary steps in conducting shape analysis using Procrustes techniques such as translating, scaling and rotating compared profiles;

Fig. 6A illustrates an exemplary comparison of a first actual profile curve from Fig. 4 to its corresponding ideal entitlement curve; and Fig. 6B shows the same curves of Fig. 6A after Procrustes analysis including translation, rotation and scaling of the curves;

Fig. 7A illustrates an exemplary comparison of a second actual profile curve from Fig. 4 to its corresponding ideal entitlement curve; and Fig. 7B shows the same curves of Fig. 7A after Procrustes analysis including translation, rotation and scaling of the curves;

Fig. 8 provides an example of clustering analysis as conducted on the profile curves of Fig. 4, particularly showing a comparison of profile curves with resulting distances from the entitlement curve (I); and

Fig. 9 provides an example of clustering analysis as conducted on profile startup data to yield fleet startup multivariate clustering using multiple startup profile characterization as input.

DETAILED DESCRIPTION OF THE INVENTION

Reference is now made to particular embodiments of the invention, one or more examples of which are illustrated in the drawings. Each embodiment is presented by way of explanation of aspects of the invention, and should not be taken as a limitation of the invention. For example, features illustrated or described with respect to one embodiment may be used with another embodiment to yield a still further embodiment. It is intended that the present invention include these and other modifications or variations made to the embodiments described herein.

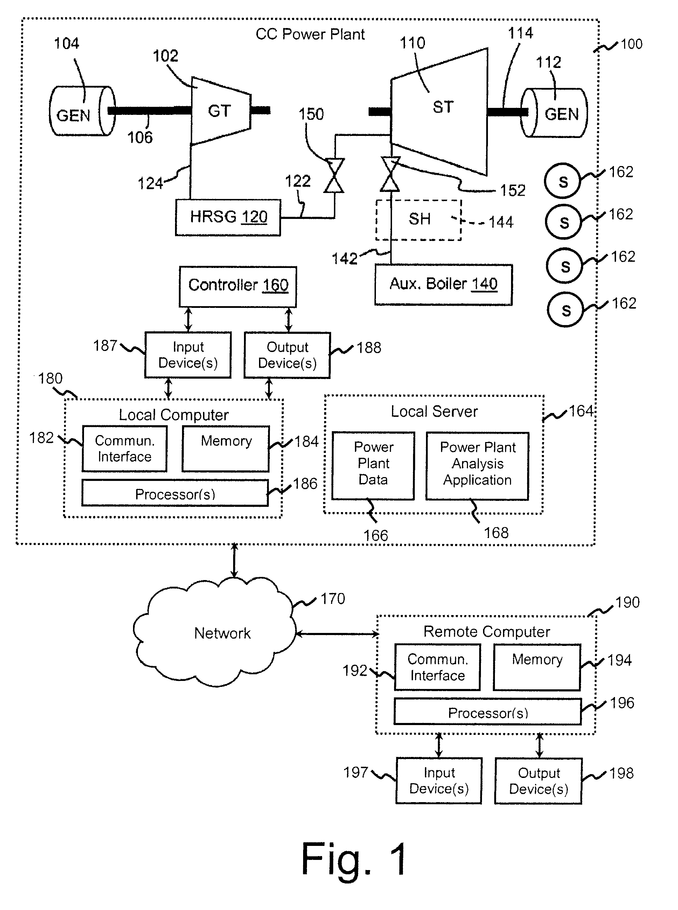

In general, Figs. 1-9 illustrate various aspects of the presently disclosed systems and methods for implementing automated statistical comparison of shape and variation modes for operational profiles of power plant operations. Fig. 1 illustrates various exemplary hardware and software components that may be used in one of the subject systems.

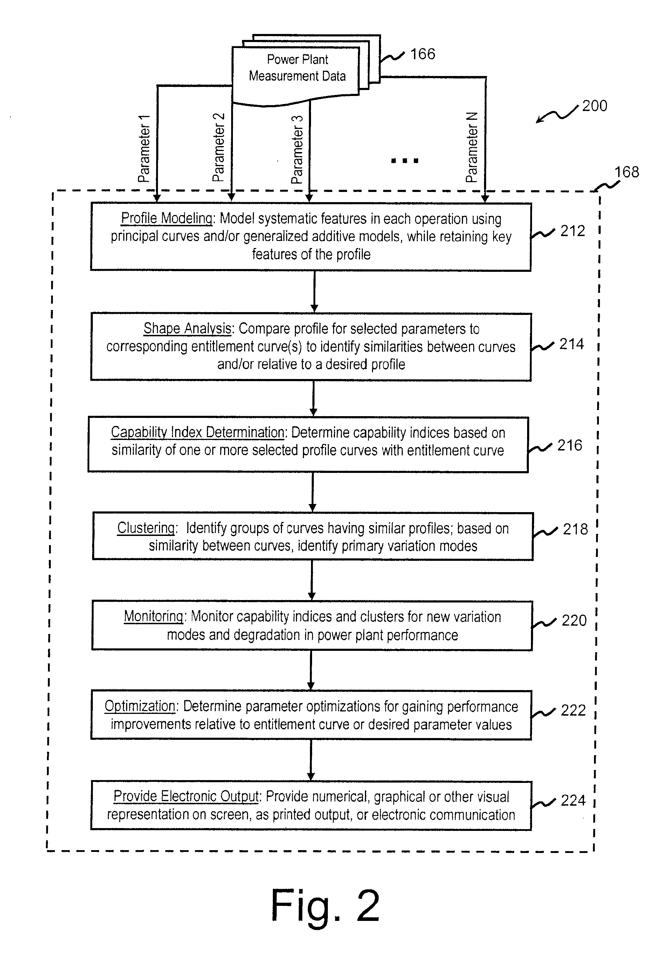

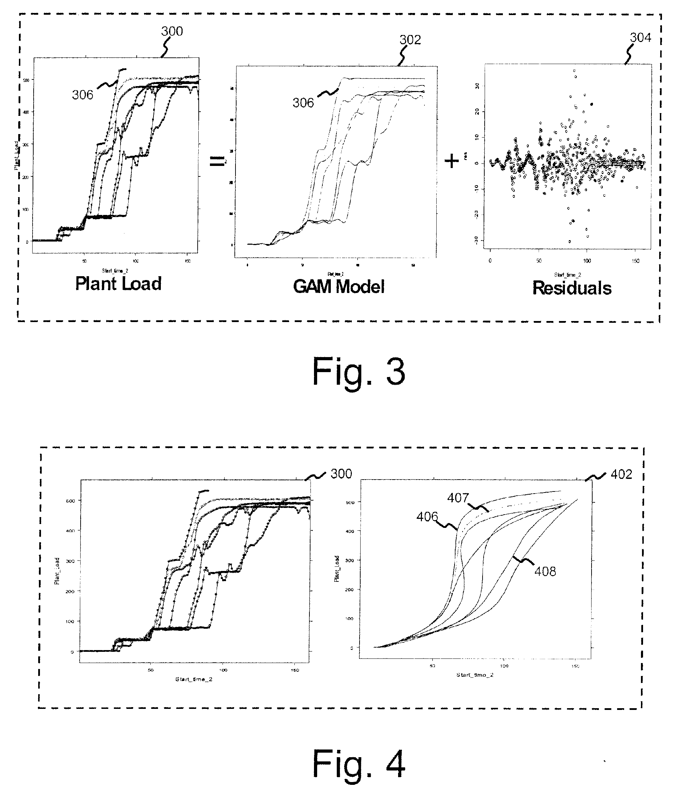

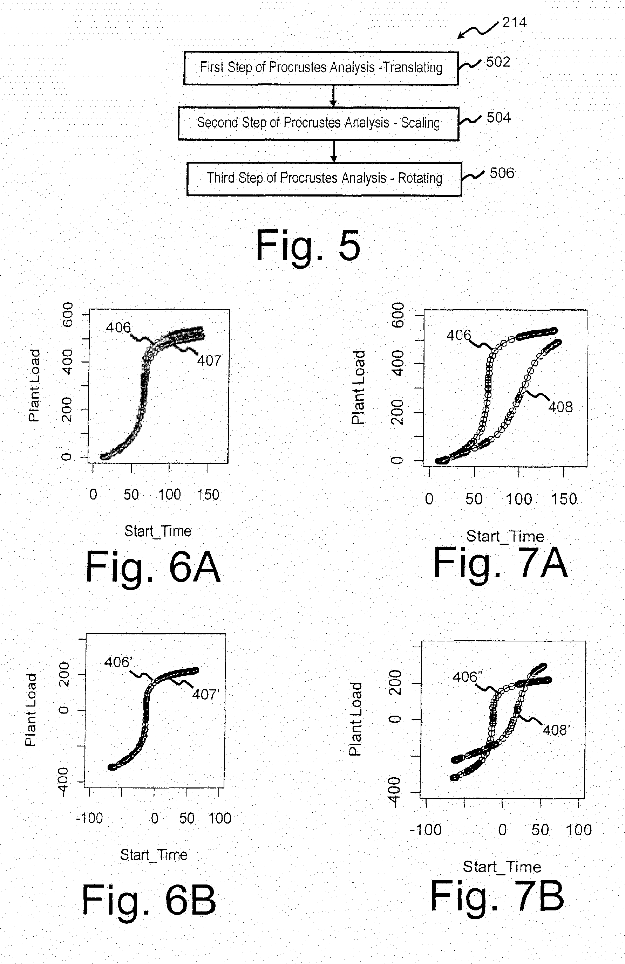

Figs. 2 and 5 illustrate exemplary steps in a method of implementing exemplary aspects of the disclosed technology. Figs. 3-4 and 6A-9, respectively, illustrate general examples of selected characterization and visualization features for power plant operations that may be implemented in accordance with various embodiments of the disclosed technology.

Referring now to Fig. 1, a primary physical component of a system for implementing aspects of the disclosed technology corresponds to a software package including a power plant analysis application 168. The power plant analysis application 168 is a software-based module comprising a set of computer-readable and executable instructions that are stored on a tangible computer-readable medium. In the example of Fig. 1, the power plant analysis application 168 is stored on a local server 164, server 164 being provided locally to one or more power plants, such as combined cycle (CC) power plant 100. Power plant analysis application 168 accesses and analyzes power plant data 166, such as may be received from a controller 160 interfaced with a plurality of sensors 162 that are provided within power plant 100 for tracking and capturing various monitored characteristics of power plant 100. It should be appreciated that although the power plant data 166 and power plant analysis application 168 are depicted in Fig. 1 as being stored at a local server location 164, the memory containing such computer-readable data and instructions may actually be located in a variety of locations local to or remote from a power plant.

Referring still to power plant analysis application 168, the computer-readable information stored within such software module includes various instructions for analyzing power plant measurement data in accordance with a variety of preconfigured definitions defining the entitlement curves or other information related to various power plant operations. Exemplary power plant operations may include but are not limited to starts, shutdowns, trips, load rejections, grid disturbances, fuel transfers, combustion mode transfers, islanded load steps, periods suitable for steady-state performance evaluation, loading, unloading, and transients affecting component life. Continuous real-time power plant data 166 that is received from the plurality of sensors 162 or other monitoring devices within power plant 100 are then processed relative to the preconfigured definitions mentioned above. Processing may include the various profile modeling, shape analysis, capability index determination, clustering, monitoring and/or optimization steps described in accordance with the presently disclosed technology.

For example, referring still to Fig. 1, a user accessing the subject power plant analysis application 168 from a local computer 180 or a remote computer 190 linked via network 170 may be able to access preconfigured visualizations of various data associated with selected identified instances of a power plant operation. Such visualizations may be displayed or printed, for example, using one or more output devices 188, 198 provided at respective computers 180, 190. Computers 180, 190 may also include input devices (e.g., 187 and 197) to select specific types of desired modeling or analysis results for viewing, such that customized visualizations based on selectable user configurations are possible as described herein. Input device 187 and output device 188 associated with local computer 180 may also be configured to provide input and output features for the controller 160 or other devices located at the CC power plant 100.

Referring more particularly to Fig. 1, CC power plant 100 may include a variety of particular components, each having certain characteristics that may be monitored using the plurality of sensors 162 or other comparable monitoring equipment suitably provided to track parameters associated with the components of power plant 100. The data from such sensors 162 may then be interfaced to a user through controller 160. The physical components shown and described with reference to Fig. 1 are simplified to provide a descriptive example of the types of power plant components whose characteristics may be monitored to provide power plant data 166. As such, the components of Fig. 1 should in no way be considered a limiting feature of the presently disclosed technology.

In the exemplary embodiment of Fig. 1, power plant 100 includes one or more gas turbine(s) (GT) 102 coupled to a generator 104. A rotating shaft 106 operatively couples gas turbine 102 to generator 104 such that power can be generated from the turning of rotating shaft 106 by gas turbine 102. Power plant 100 also may include a steam turbine (ST) 110 coupled to a generator 112. A rotating shaft 114 operatively couples steam turbine 110 to generator 112 such that power can be generated from the turning of rotating shaft 114 by steam turbine 110. Although shown as separate generators 104, 112, it is possible that both turbines 102, 110 power the same generator.

Referring still to Fig. 1, a heat recovery steam generator (HRSG) 120 may be provided for generating a first steam flow 122 from exhaust 124 from gas turbine 102. That is, exhaust 124 from gas turbine 102 is used to heat water to generate a steam flow 122, which is applied to steam turbine 110. An auxiliary boiler 140 is operatively coupled to steam turbine 110 for producing a second steam flow 142 having characteristics appropriate for starting the steam turbine. Optionally, if necessary, a superheater (SH) 144 may be provided to superheat steam flow 142, e.g., from a saturated steam state created by auxiliary boiler 140. Exemplary power plant 100 of Fig. 1 also includes a first control valve 150 for controlling application of first steam flow 122 to steam turbine 110, and a second control valve 152 for controlling application of second steam flow 142 to the steam turbine.

A controller 160 controls operation of power plant 100 and, in particular, continuously operates the plant in a combined cycle during operation of gas turbine 102 by: starting steam turbine 110 by controlling second control valve 152 to apply second steam flow 142 from auxiliary boiler 140 to the steam turbine, then starting gas turbine 102 and HRSG 120, and then applying first steam flow 122 from HRSG 120 to the steam turbine. Controller 160 may include a computerized control system electrically linked to each component and capable of controlling any mechanisms that control operation of each component, e.g., control valves 150, 152. Sensors 162 or other monitoring equipment may be coupled directly to selected components of power plant 100, or may be interfaced to such components through controller 160 or through other suitable interface mechanisms.

Referring still to Fig. 1, the data obtained from the various sensors 162 in power plant 100 may be provided to a local server 164. For example, the monitored data is represented in Fig. 1 as a database 166 within local server 164 that stores the power plant data. Although illustrated as a single module 166 for storing power plant data, it should be appreciated that multiple databases, servers, or other related computer or data storage devices may be used to store the monitored data from sensors 162. An additional memory module within local server 164 may correspond to the software instructions and definitions provided within power plant analysis application 168. The portions of the raw power plant data that are identified and characterized as corresponding to particular instances of a power plant operation and/or key events and or data segments within such instances may simply be tagged within the power plant data memory module 166 or may be extracted and stored in a different memory location (not shown).

Once the power plant analysis application 168 has automatically extracted power plant measurement data within various types of power plant operations, a user may be able to access and further manipulate such data by accessing features associated with the power plant analysis application 168 via either a local computer 180 or a remote computer 190, both of which may be coupled directly or indirectly via one or more wired or wireless connections to local server 164. Remote computers may be coupled via a network 170, which may correspond to any type of network, including but not limited to a dial-in network, a utility network, public switched telephone network (PSTN), a local area network (LAN), wide area network (WAN), local area network (LAN), wide area network (WAN), metropolitan area network (MAN), personal area network (PAN), virtual private network (VPN), campus area network (CAN), storage area network (SAN), the Internet, intranet or ethernet type networks, combinations of two or more of these types of networks or others, implemented with any variety of network topologies in a combination of one or more wired and/or wireless communication links.

Each computer 180, 190 may respectively include one or more communication interfaces 182, 192, one or more memory modules 184, 194 and one or more processing devices such as a microprocessor or the like 186, 196. Computing/processing device(s) 186, 196 may be adapted to operate as a special-purpose machine by executing the software instructions rendered in a computer-readable form stored in memory/media elements 184, 194. When software is used, any suitable programming, scripting, or other type of language or combinations of languages may be used to implement the teachings contained herein. In other embodiments, the methods disclosed herein may alternatively be implemented by hard-wired logic or other circuitry, including, but not limited to application-specific circuits.

Memory modules contained within local server 164, local computers 180 and/or remote computers 190 may be provided as a single or multiple portions of one or more varieties of computer-readable media, such as but not limited to any combination of volatile memory (e.g., random access memory (RAM, such as DRAM, SRAM, etc.) and nonvolatile memory (e.g., ROM, flash, hard drives, magnetic tapes, CD-ROM, DVD-ROM, etc.) or any other memory devices including diskettes, drives, other magnetic-based storage media, optical storage media, solid state storage media and others. Exemplary input device(s) 187, 197 may include but are not limited to a keyboard, touch-screen monitor, eye tracker, microphone, mouse and the like. Exemplary output device(s) 188, 198 may include but are not limited to monitors, printers or other devices for visually depicting output data created in accordance with the disclosed technology.

Referring now more particularly to Fig. 2, exemplary steps are presented in accordance with a method 200 for characterizing shapes of profile/curves of key parameters with respect to time during different operational modes of a power plant. The key parameters correspond to those features within a power plant environment whose performance is monitored by one or more sensors 162 or the like, as depicted in Fig. 1. Different exemplary types of operational modes may include, but are not limited to, starts, shutdowns, trips, load rejections, grid disturbances, fuel transfers, combustion mode transfers, islanded load steps, periods suitable for steady-state performance evaluation, loading, unloading, and transients affecting component life.

The disclosed techniques generally use non-parametric methods such as principal curves and generalized additive models to characterize the profile of each parameter during an operational mode, as indicated in profile modeling step 212. The extracted non-parametric model is then used to characterize the different variations and similarity with an entitlement profile/curve using statistical shape analysis, as generally indicated in shape analysis step 214. Procrustes analysis is used to measure similarity between individual profiles of a power plant, and to optionally develop in step 216 a capability index for a given power plant based on similarity of that plant's operational profiles with a corresponding entitlement curve for that plant. Still further, step 218 involves clustering the profiles to identify principal modes of shape variation. The principal modes of variation identified by cluster analysis can be related to one or more specific root causes based on expert opinion or other predetermined criteria. Finally, step 220 includes a monitoring scheme monitors the principal modes of variation to detect new variation in shape and also identify degradation in the capability index. Additional parameter optimization features may also be provided as part of step 222. Electronic output data associated with any one or more of the above steps ultimately may be provided as part of step 224.

Referring more particularly to Fig. 2, a method 200 of statistically comparing the shape and variation modes of operational profiles for power plant operations includes steps that may be applied to one or more or all of the parameters that are monitored and identified as part of the power plant measurement data 166. It should be appreciated that the power plant measurement data 166 illustrated in Fig. 2 may be provided by capturing a particular subset of information from the monitored parameter data that may be continuously available from the sensors within a power plant. In particular, initial analysis may be conducted on such continuous data to appropriately identify only portions of the data that correspond to particular instances of an operation. For example, when a comparison of plant starts is desired, the power plant measurement data may include parameter information only for the time spans that encompass a plurality of respective plant starts. Such instances may be identified, for example, by accessing continuous power plant operational data and comparing that data with preconfigured definitions that define parameter levels for when a given type of operation begins and ends. As such, only the parameter data for these particular time spans between the beginning and the end of an operational instance are needed and provided as part of the power plant measurement data. Such identified instances can be tagged with unique identifiers or time-bound indices for ready recall in future analysis steps.

Referring still to Fig. 2, the proposed system as illustrated in Fig. 1, particularly the power plant analysis application 168, is executed via one or more associated processors to analyze power plant data 166 to perform various steps of analyzing one or more selected parameters or all parameters monitored within power plant 100 and provided as power plant data 166.

A first exemplary step 212 within the subject power plant analysis application is executed by a software module directed to profile modeling. In accordance with such first step 212, systematic features within each power plant operation are modeled. In some examples, a principle curves technique and/or a generalized additive model (GAM) technique are employed to implement the profile modeling. Both such techniques start with modeling the profile of each operational parameter based on measurements obtained from previous starts. Non-parametric models such as principal curves or a generalized additive model (GAM) are used to describe the systematic features in the data and remove the noise. In general, both such techniques take measurement data 166 for one or more given parameters (e.g., plant load) measured during different instances of a type of plant mode/operation (e.g., plant starts) and generate corresponding curves/profiles consisting of a continuous time-series model for that parameter during the operational instances.

Fig. 3 illustrates a first profile modeling example, particularly utilizing a generalized additive model to model plant load with respect to time. The first graphical portion 300 in Fig. 3 shows plant load measurement data, the middle graphical portion 302 shows the same data after processed using a generalized additive model, and the rightmost graphical portion 304 shows the residuals which are also calculated in accordance with the generalized additive model. Each set of data in Fig. 3 illustrates a collection of n multiple instances of one operational parameter (i.e., plant load measured in Megawatts (MW)) observed with respect to $t$ (time) for a given unit/plant. The left-most curve 306 in graphical portions 300 and 302 represents the entitlement curve corresponding to ideal parameter performance within a given operation. All other data points or curves in each graphical portion 300-304 represent actual data for operational instances.

The particular manner in which a generalized additive model is applied to plant load data such as illustrated in graphical portion 300 to yield the GAM data represented in graphical portion 302 and the residuals represented in graphical portion 304 may be defined in some examples in accordance with equation (1) below.

$$y = b(t) + \sum_{i=1}^{n-1} s_i \beta_i + \sum_{i=1}^{n-1} b(s_i, t) + \varepsilon \qquad (1)$$

In equation (1), the first term $b(t)$ is a $b$-spline based model for plant load that is dependent on time (t). The second term in equation (1) models the difference in levels between individual starts where $s_i$ is an indicator variable for the start i. The third term in equation (1) is an interaction term which models difference in shapes between the curves, and the residual term ($\varepsilon$) is un-modeled noise. The number of degrees of freedom is selected based on evaluation of the residual terms such that the parameters can be modeled as close as possible to being independent and identically distributed (IID) random variables. As seen from equation (1), the GAM approach allows for direct statistical comparison of differences in levels among curves and differences in shape among curves as defined by the second and third terms in the model. A further additional term denoting data for a unit/plant can be used to determine if two or more units have different levels and shapes. However, the interpretation of the nature of differences between the curves and types of variation modes is difficult to obtain from this model alone. These difficulties are relieved in part by implementing the shape analysis step 214 to identify variation modes.

Referring now to Fig. 4, a graphical representation is provided for another technique for implementing profile modeling step 212, namely a principal curves technique. A principal curves based approximation of curves can be used to represent the curves. Principal curve analysis is a nonlinear extension to principal component analysis (PCA) techniques, which are used to summarize symmetric relationships between two variables (e.g., plant load and time) with a smooth curve while removing noise from the data. The left graphical data portion 402 in Fig. 4 provides the principal curves approximation to the dataset represented in graphical portion 300.

Referring again to Fig. 2, a second exemplary step 214 within the subject power plant analysis application is executed by a software module directed to shape analysis. In accordance with such step 214, the profiles generated in step 212 are compared to a corresponding entitlement curve (the ideal parameter profile) to identify similarities between and among actual data curves or between and among actual curves and the ideal entitlement curve. In some particular examples, shape analysis in step 214 may be based on the developed profile model in equation (1). In such examples, the n starts are compared pair-wise to each other and to the entitlement curve to calculate respective similarity values. The similarity values are calculated based on statistical shape analysis using methods such as Procrustes analysis. Each time shape analysis is performed using Procrustes analysis, the shape difference between two analyzed curves is broken down using homogenous transformations. Such transformations can be implemented using three general steps, including a translating step 502, a scaling step 504 and a rotating step 506, as indicated in Fig. 5. Such steps are utilized to match the shapes of the two compared curves, with the residual sum squares measuring the remaining difference between the curves. A given curve's similarity with the entitlement curve can also be used to rank the individual starts or other specific types of power plant operation.

The algorithm depicted in Fig. 5 for Procrustes analysis starts with a first translating step 502, wherein all the curves are moved to common center by aligning the centroids of the respective curves. Next, isomorphic scaling is performed in step 504, which scales each of the curves to a similar size while maintaining its respective shape. The scaling coefficients used in step 504 correspond to the difference in level of parameters value (e.g. plant load) between the individual curves. The next step 506 involves rotation, where rotation is performed to align given curves to an average shape. In instances when a given curve is compared to an entitlement curve, the rotation is performed to align a given curve to the entitlement curve. The rotation can be based on an orthogonal rotation matrix which minimizes the sum squared error between the given curve and the entitlement curve. It should be appreciated that other known techniques for implementing shape comparison or for translating, scaling or rotating compared curves may also be practiced in accordance with the disclosed technology.

Figs. 6A, 6B, 7A and 7B illustrate exemplary aspects of Procrustes analysis derived for selected sample curves 407 and 408 compared with entitlement curve 406, as selected from the plant data represented in graphical portion 402 of Fig. 4. Fig. 6A depicts a first plant load curve 407 plotted versus time relative to entitlement curve 408 after the exemplary profile modeling step 212. Fig. 6B depicts modified versions 406', 407' of curves 406 and 407, respectively, after application of the translating, rotating and scaling steps of exemplary shape analysis step 214. The comparison of curve 407 to entitlement curve 406 as represented in Figs. 6A and 6B employed exemplary matrix values defined by a scaling value of 1.040, a rotation value of 2.443 radians and a remaining sum square error (SSE) value of 2206926. Similarly, Fig. 7A depicts a second plant load curve 408 plotted versus time relative to entitlement curve 406 after the exemplary profile modeling step 212. Fig. 7B depicts modified versions 406", 408' of curves 406 and 408, respectively, after application of the translating, rotating and scaling steps of exemplary shape analysis step 214. The comparison of curve 408 to entitlement curve 406 as represented in Figs. 7A and 7B employed exemplary matrix values defined by a scaling value of 1.064, a rotation value of 0.668 radians and a remaining sum square error (SSE) value of 17675.58.

Once the shape analysis of step 214 is executed, an additional optional step that also may be implemented corresponds to a step 216 of electronically calculating a capability index. Capability indices can be developed for a given power plant based on similarity of that plant's startup profiles with the entitlement curve for that plant. In some particular examples, the parameters from the Procrustes analysis of profile curves from given unit (e.g., the scale, translation, rotation and SSE values) are used to determine a capability index which is the average distance of startups of a given plant from the entitlement profile. The distances can be alternatively calculated based on similarity values using the Procrustes transformation output using defined distance measures such as Euclidean distance. The parameters whose distances are analyzed in determining a capability index may be considered with equal weight to all parameters or with a weighted distance measurement where certain transformation values are weighted more (e.g., translation values maybe more critical than rotation values).

Referring again to Fig. 2, another step in the presently disclosed method of statistically comparing the shape and variation modes of operational profiles for power plant operations generally includes a clustering step 218. In clustering step 218, groups of curves having similar profiles are identified. Based on the similarity between the curves, primary variation modes or types of operations are identified within the power plant data. For example, the pairwise similarity values between the curves (defined, for example, by the capability indices of step 216) are used to segment the curves based on such shape analysis outcome. Each of the curve segments represent unique variation modes in the data which can be analyzed further for root cause analysis.

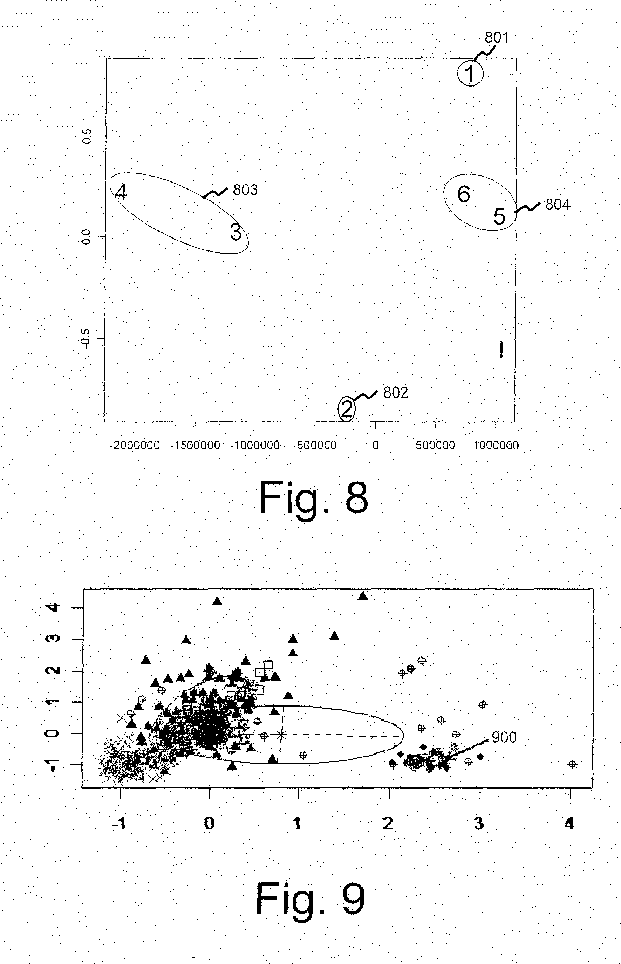

Figs. 8 and 9 illustrate different examples of clustering techniques that may be implemented in accordance with the disclosed technology. The clustering can be performed directly on the parameters obtained as output from shape analysis or can be suitably transformed or normalized to improve clustering. For example, Fig. 8 graphically depicts the results of clustering for the single profile parameter (e.g., plant load) measured by the profile curves represented in graphical portion 402 of Fig. 4. A rated value for each profile curve is plotted in Fig. 8 as one of the respective digits 1-6, which are variously located relative to entitlement curve (I). These profile curve values are then grouped relative to their proximity with other profile curve values. For example, a first cluster 801 corresponds to just profile curve 1. A second cluster 802 corresponds to just profile curve 2. A third cluster 803 corresponds to the collection of profile curves 3 and 4, and a fourth cluster 804 corresponds to the collection of profile curves 5 and 6.

When profile analysis and clustering is applied across multiple parameters, the results could be represented by a similar graphical representation as that shown in Fig. 9. In Fig. 9, each different style data point (e.g., the triangles, cross marks, squares, and crosshairs) represents a different type of parameter for which a profile value is calculated and plotted. Clustering for each type of parameter is represented by the elliptical enclosures. For example, an exemplary cluster 900 represents a determined grouping for selected parameter values represented by the crosshair data points in Fig. 9. The type of analysis depicted in Fig. 9 shows how profile characterization across multiple parameters can be used to understand segments and their characteristics based on multiple profiles.

Referring still further to Fig. 2, step 220 includes monitoring the one or more selected parameters within continuously generated power plant data. For example, the capability indices and clusters can be electronically monitored to identify new variation modes. In addition, capability values obtained from different operational parameters and the variation modes can be monitored to detect degradation in similarity with an entitlement curve and to capture new variations (clusters) which may indicate a different operation profile.

Step 222 involves optimizing the performance of a power plant by comparisons made between present operations and an entitlement curve. By tracking plant performance and comparing such performance to previous operations and/or entitlement curves for that type of operation, then parameter optimizations can be determined for gaining performance improvements relative to the entitlement curve(s). Based on comparison of a given unit startup profile with other units of similar operating characteristics, specific suggestions can be provided to optimize its performance to match to reduce startup time and cost.

Finally, an exemplary step 224 involves providing selected information generated in accordance with the disclosed techniques as electronic output to a user. Exemplary information that may be provided as output includes, but is not limited to, graphical representations of the profile modeling and/or shape analysis steps 212 and 214, numerical, graphical or other visualization outputs of the capability index determinations of step 216 and/or clustering step 218, as well as various electronic indications of the monitoring and/or optimization steps 220 and 222. Electronic output may be electronically displayed on an output device such as a monitor, television, controller screen, or other display screen, electronically printed, or electronically communicated via e-mail, network-based wired and/or wireless communication, or other electronic transmission.

Having now described various steps and features of the disclosed technology in particular detail with reference to Figs. 1-9, one of ordinary skill in the art will appreciate that such technology offers numerous specific improvements. The disclosed system and method provides features for modeling an entire parameter profile (i.e., a continuous time-series profile model) rather than key discrete landmarks to understand similarity to an entitlement or design profile. Statistical shape analysis can be used not only to compare similarity of startups from a given plant to an entitlement profile and to understand plant capability, but can also be used to compare/benchmark multiple plants based on similarity of its startups with an entitlement curve. The disclosed technology provides for the extraction of variation modes in startups or other power plant operations by clustering of profiles based on statistical shape analysis. Capability indices for a given plant can be determined based on similarity of its various operational parameter profiles to corresponding entitlement curves. Primary modes of variation identified based on shape analysis can be linked to root causes by looking at their occurrences in the fleet. Variation in startup profile curves can be monitored for early detection of new variation modes and degradation in capability of a given plant.

Advantages afforded by the above improvements and other disclosed features of the present technology include abilities to: identify opportunities to improve startup time and provide recommendations, sell hardware/ software upgrades to customers, provide automated ranking of plants/units based on a startup scorecard, offer value-based services or products in future for total plant, implement fleet level comparison of starts enabling better strategy for customer service management, and implement capability analysis based on distance of profiles from entitlement curve for critical operational parameters.

While the present subject matter has been described in detail with respect to specific exemplary embodiments and methods thereof, it will be appreciated that those skilled in the art, upon attaining an understanding of the foregoing may readily produce alterations to, variations of, and equivalents to such embodiments. Accordingly, the scope of the present disclosure is by way of example rather than by way of limitation, and the subject disclosure does not preclude inclusion of such modifications, variations and/or additions to the present subject matter as would be readily apparent to one of ordinary skill in the art.

**Claims**

1. A method of electronically analyzing power plant data (200), comprising:

   electronically accessing power plant operational data including one or more monitored parameters;
   generating a continuous time-series profile model (212) of selected monitored parameters during identified instances of at least one given type of power plant operation;
   conducting shape analysis (214) by comparing the continuous time-series profile model of selected monitored parameters to an entitlement curve representing ideal performance for the at least one given type of power plant operation; and
   providing one or more of the generated continuous time-series profile model and the results of the conducted shape analysis as electronic output to a user (224).

2. The method of claim 1, wherein said step of generating a continuous time-series profile model (212) of selected monitored parameters comprises using a generalized additive model to generate a continuous time-series model of the selected monitored parameters.

3. The method of claim 1, wherein said step of generating a continuous time-series profile model (212) of selected monitored parameters comprises using a principle curves model to generate a continuous time-series model of the selected monitored parameters.

4. The method of any of claims 1 to 3, further comprising determining a capability index (216) for selected monitored parameters based on the similarity of the generated continuous time-series profile models with the entitlement curve.

5. The method of any of claims 1 to 4, wherein said step of generating a continuous time-series profile model (212) of selected monitored parameters is repeated for a plurality of identified instances of the at least one given type of power plant operation; and wherein said method further comprises clustering together (218) identified groups of profile models having similar profiles.

6. The method of claim 5, wherein clustering together (218) identified groups of profile models having similar profiles further comprises identifying primary variation modes within the at least one given type of power plant operation.

7. The method of any preceding claim, further comprising a step of continuously monitoring (220) one or more parameters resulting from the conducted shape analysis to identify degradation in power plant performance.

8. The method of any preceding claim, further comprising a step of using the conducted shape analysis to determine optimizations (222) for selected monitored parameters to gain performance improvements relative to the entitlement curve for the at least one given type of power plant operation.

9. The method of any preceding claim, wherein said at least one given type of power plant operation comprises one or more of starts, shutdowns, trips, load rejections, grid disturbances, fuel transfers, combustion mode transfers, islanded load steps, periods suitable for steady-state performance evaluation, loading, unloading, and transients affecting component life.

10. The method of any preceding claim, wherein said continuous power plant operational data comprises live data or historical data.

11. The method of any preceding claim, wherein conducting shape analysis (214) comprises translating (502), scaling (504) and rotating (506) the continuous time-series profile model of selected monitored parameters to align with the corresponding entitlement curve for such selected parameters.

12. The method of any preceding claim, wherein providing one or more of the generated continuous time-series profile model and the results of the conducted shape analysis as electronic output to a user (224) comprises providing numerical, graphical or other visual representation on a display device, as printed output or as an electronic communication.

13. A computer program comprising computer program code means adapted to perform the steps of the method of any of claims 1 to 12, when run on a computer.

**14.** The computer program of claim 13, embodied on a computer-readable medium.

**15.** A power plant analysis and display system, comprising:

at least one processing device (186, 196);
at least one memory (184, 194) comprising the computer program of claim 14; and
at least one output device (198) for electronically relaying data associated with the generated continuous time-series profile model or the results of the conducted shape analysis.

# Fig. 1

Power Plant Measurement Data — 166

200

168

Parameter 1   Parameter 2   Parameter 3   . . .   Parameter N

**Profile Modeling**: Model systematic features in each operation using principal curves and/or generalized additive models, while retaining key features of the profile — 212

**Shape Analysis**: Compare profile for selected parameters to corresponding entitlement curve(s) to identify similarities between curves and/or relative to a desired profile — 214

**Capability Index Determination**: Determine capability indices based on similarity of one or more selected profile curves with entitlement curve — 216

**Clustering**: Identify groups of curves having similar profiles; based on similarity between curves, identify primary variation modes — 218

**Monitoring**: Monitor capability indices and clusters for new variation modes and degradation in power plant performance — 220

**Optimization**: Determine parameter optimizations for gaining performance improvements relative to entitlement curve or desired parameter values — 222

**Provide Electronic Output**: Provide numerical, graphical or other visual representation on screen, as printed output, or electronic communication — 224

# Fig. 2

EP 2 520 994 A2

Plant Load = GAM Model + Residuals

**Fig. 3**

**Fig. 4**

13

Fig. 5

Fig. 6A

Fig. 7A

Fig. 6B

Fig. 7B

Fig. 8

Fig. 9